# EUROPEAN PATENT SPECIFICATION

(11) **EP 2 242 910 B1**
(45) Date of publication and mention of the grant of the patent: **20.03.2013**
(21) Application number: 08868269.5
(22) Date of filing: 29.12.2008
(51) Int. Cl.: F01D 25/16, F01D 3/04, F16C 17/22, F16C 33/10, F16C 17/10, F16C 25/02

(54) **BEARING ASSEMBLY FOR A GAS TURBINE**
LAGERANORDNUNG FÜR EINE GASTURBINE
ENSEMBLE PALIER POUR TURBINE À GAZ

(30) Priority: 28.12.2007 IT MI20072442
(43) Date of publication of application: 27.10.2010
(73) Proprietor: Ansaldo Energia S.p.A., Genova (IT)
(72) Inventor: DOTTA, Claudio, I-17044 S. Martino Stella (IT); TRAVERSO, Riccardo, I-16154 Genova (IT); MINNITI, Silvia, I-16156 Genova (IT); ROSA, Sergio, I-16151 Genova (IT)
(74) Representative: Jorio, Paolo
(86) International application number: PCT/IB2008/003642
(87) International publication number: WO 2009/083789

(56) References cited:
- EP-A- 0 028 424
- EP-A- 1 479 875
- WO-A-00/28190
- DE-C- 805 336
- FR-A- 2 449 820
- SU-A1- 1 370 336
- US-A- 5 363 557

## Description

### TECHNICAL FIELD

The present invention relates to a bearing assembly for a gas turbine.

### BACKGROUND ART

A known type of gas turbine comprises a rotor, provided with a shaft extending along a longitudinal axis, a cylindrical case, commonly referred to as bearing stand, which extends about the shaft, and at least one bearing assembly, which is arranged between the case and the shaft and is supported by the case.

The bearing assembly of the gas turbine is arranged into an annular groove of the rotor shaft, defined by an annular surface and two facing annular shoulders. Bearing assembly of this type are disclosed in EP 1479875 and EP 0028424.

In small-sized gas turbines, the dimensions of the annular groove for accommodating the bearing assembly are obviously smaller than the dimensions of the annular grooves of the larger-sized gas turbines. Specifically, in small-sized gas turbines, the annular surface and the shoulders have a shorter axial length and a shorter radial length, respectively, than those of the larger-sized gas turbines. However, current bearing assemblies are relatively cumbersome and it is often not possible to accommodate such bearing assemblies into the annular grooves of the small-sized gas turbines. This results in considerable difficulties in making bearing assemblies which, simultaneously are effective and small-sized. Indeed, most of the latest bearing assemblies may not be adapted to the dimensions of the grooves of small-sized turbines.

### DISCLOSURE OF INVENTION

It is an object of the present invention to provide a bearing assembly which is free from the drawbacks of the known art highlighted herein; specifically, it is an object of the invention to provide a bearing assembly for a small-sized gas turbine which is effective at the same time.

In accordance with such objects, the present invention relates to a bearing assembly for a gas turbine according to claim 1.

In accordance with such objects, the present invention further relates to a gas turbine according to claim 3.

### BRIEF DESCRIPTION OF THE DRAWINGS

Further features and advantages of the present invention will be apparent from the following description of a non-limitative embodiment thereof, with reference to the figures in the accompanying drawings, in which:
- figure 1 is a perspective section view, with parts removed for clarity, of a portion on a gas turbine according to the present invention;
- figure 2 is a perspective view, with parts in section and parts removed for clarity, of a first detail of the bearing assembly made according to the present invention;
- figure 3 is a perspective section view, on enlarged scale, with parts removed for clarity, of a first detail of the gas turbine in figure 1;
- figure 4 is a perspective section view, on enlarged scale, with parts removed for clarity, of a second detail of the gas turbine in figure 1;
- figure 5 is a schematic side view, with parts removed for clarity, of a second detail of the bearing assembly made according to the present invention; and
- figure 6 is a schematic side view, with parts removed for clarity, of a third detail of the bearing assembly made according to the present invention.

### BEST MODE FOR CARRYING OUT THE INVENTION

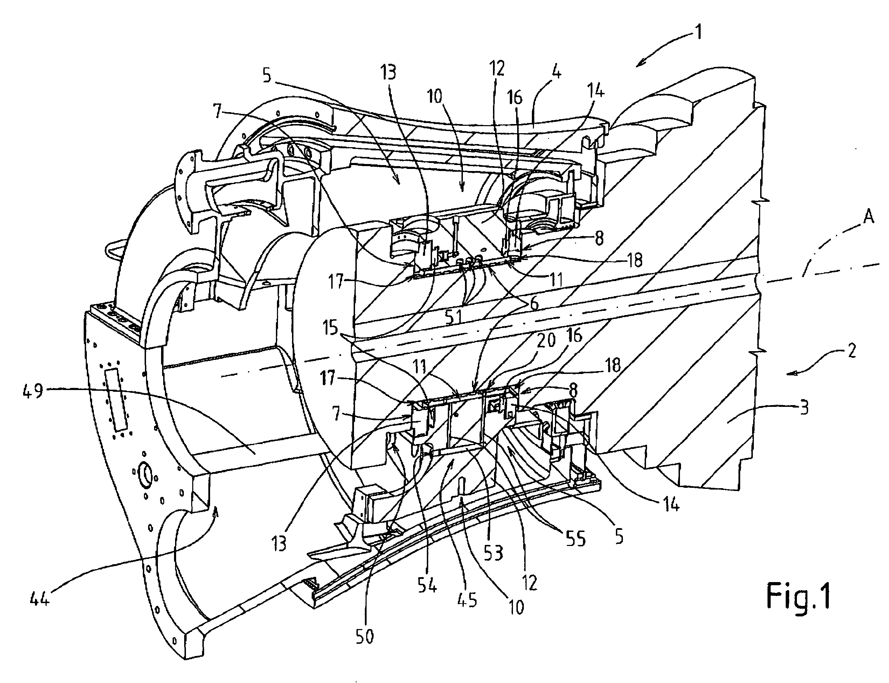

In figure 1, numeral 1 indicates as a whole a gas turbine, a portion of which is shown, comprising a rotor 2, provided with a shaft 3, and a case 4.

The shaft 3 extends along a substantially horizontal, longitudinal axis A and rotates about the longitudinal axis A. The case 4 is substantially cylinder-shaped and extends about the shaft 3. The shaft 3 is provided with at least one annular groove 5 delimited by a cylindrical surface 6, one annular shoulder 7 and annular shoulder 8 facing the shoulder 7. Specifically, the groove 5 is arranged close to the inlet of a compressor (not shown in the accompanying figures) of the gas turbine 1.

The gas turbine 1 further comprises at least one bearing assembly 10 adapted to be accommodated into the annular groove 5.

The bearing assembly 10 comprises a sliding bearing 11 arranged about the shaft 3, a supporting body 12 arranged in contact about the sliding bearing 11, a main thrust block 13, a secondary thrust block 14, two main thrust half rings 15, and two secondary thrust half rings 16.

With reference to figures from 1 to 4, the sliding bearing 11 axially protrudes with respect to the supporting body 12 in the contact area between the supporting body 12 and the sliding bearing 11. Specifically, the sliding bearing 11 has first and second sides 17 and 18, facing shoulder 7 and shoulder 8, respectively, and axially protrudes with respect to the supporting body 12 at the first and second sides 17 and 18.

With reference to figures from 2 to 4, the sliding bearing 11 comprises a cylinder 19 and a lining 20 of the cylinder 19.

The cylinder 19 is fixed to the supporting body 12 by connecting means, preferably connecting pins, not shown in the accompanying figures.

The lining 20 is made of low friction coefficient material, e.g. white metal.

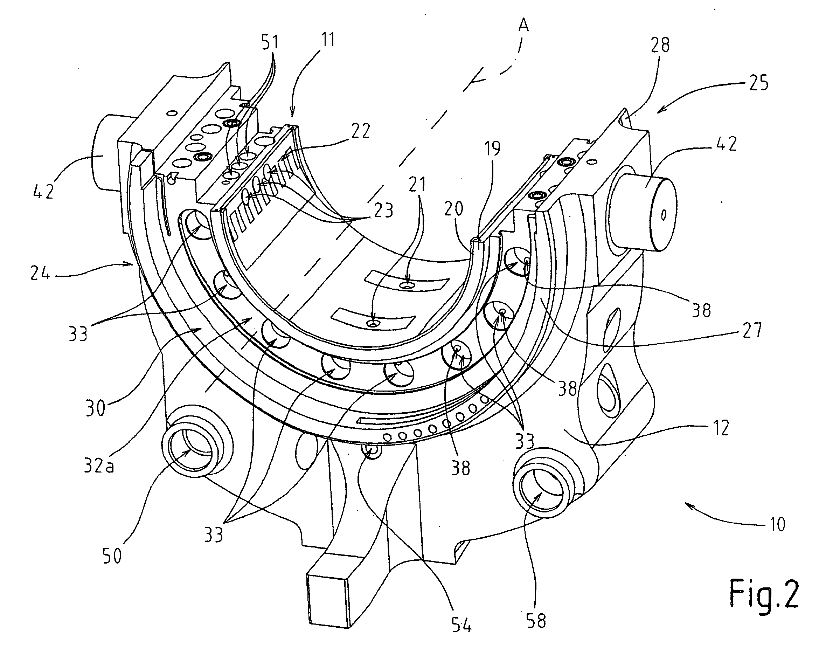

With reference to figure 2, the cylinder 19 and the lining 20 respectively have two outlet holes 21 for the lifting oil of the shaft 3 which are substantially arranged at a substantially vertical, middle plane including the axis A of the shaft 3, and two arrays of holes 22 (only one of which is shown in figure 2) for the lubrication oil outlet, which are arranged on opposite sides of the axis A with respect to the middle plane and preferably comprise three holes 23, e.g. aligned. The lubrication oil is required for the operation of the bearing assembly 10 because it is used to create an oil film which supports the shaft under hydrodynamic lubrication conditions. The sliding bearing 11 thus made may be advantageously replaced when it shows damages caused by wear; specifically, the sliding bearing 11 may be simply pulled out when required.

With reference to figures from 2 to 4, the supporting body 12 is substantially cylindrically shaped and has a main side 24, substantially facing the shoulder 7, and a secondary side 25, substantially facing the shoulder 8.

The supporting body 12 is provided with a main annular edge 27, which extends from the main side 24 in the axial direction, and a secondary annular edge 28, which extends from the secondary side 25 in the axial direction. The main edge 27 and the secondary edge 28 define a preferably cylindrical, main annular seat 30 for accommodating the main thrust block 13, and a preferably cylindrical, secondary annular seat 31 for accommodating the secondary thrust block 14, respectively.

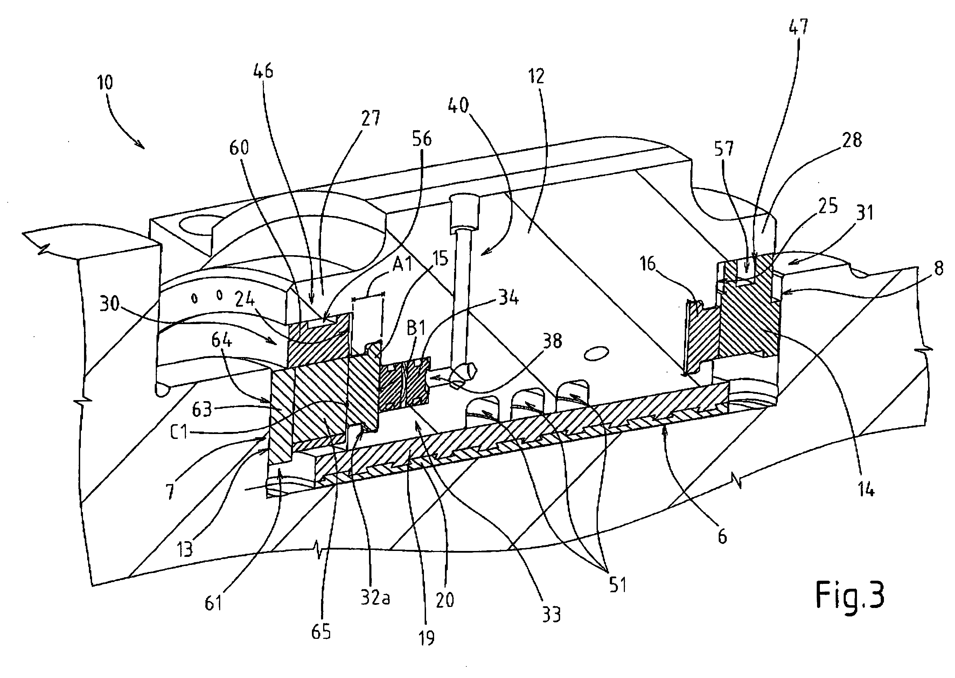

With reference to figures 2 and 3, on the main side 24, at the main annular seat 30, the supporting body 12 is provided with two substantially semi-circular, main grooves 32a (only one of which is shown in figures 2 and 3) for accommodating the main thrust half rings 15.

At the main grooves 32a, the supporting body 12 is further provided with a plurality of cylindrical main seats 33 adapted to be engaged by respective main pistons 34 (figure 3) being substantially cylindrically shaped and provided with main thrust surfaces of center B1.

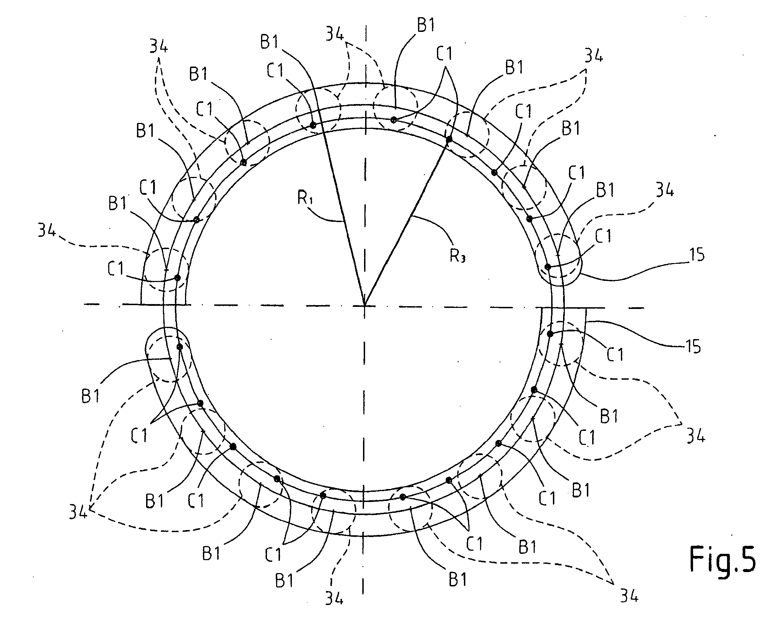

With reference to figure 5, the primitive obtained by joining the centers B1 of each main piston 34 is substantially a circumference of radius R1.

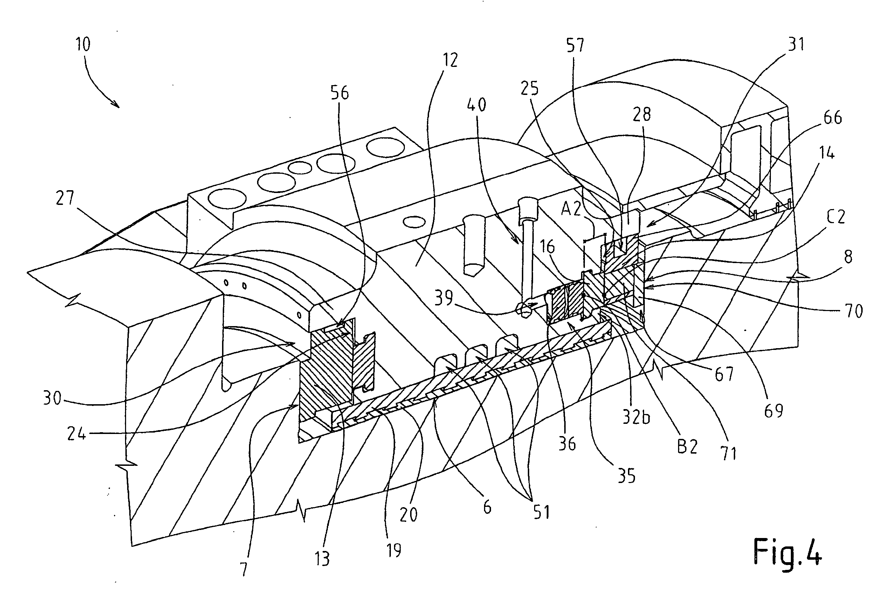

With reference to figure 4, on the secondary side 25, at the secondary annular seat 31, the supporting body 12 is provided with two substantially semicircular, secondary grooves 32b for accommodating the secondary thrust half rings 16.

At the secondary grooves 32b, the supporting body 12 is further provided with a plurality of cylindrical secondary seats 35 adapted to be engaged by respective secondary pistons 36 being substantially cylindrically shaped and provided with secondary thrust surfaces of center B2.

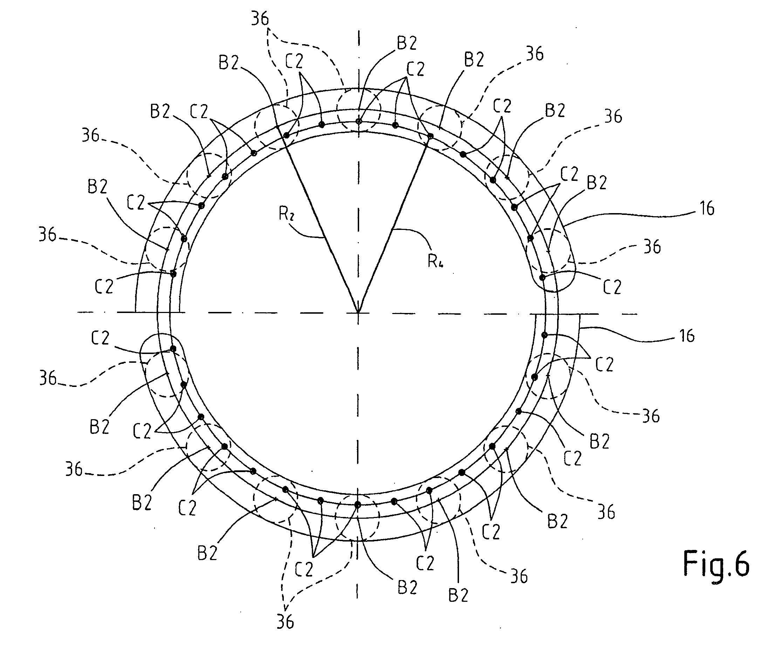

With reference to figure 6, the primitive obtained by joining the centers B2 of each secondary piston 36 is substantially a circumference of radius R2.

In the non-limitative example shown and described herein, there are sixteen cylindrical main seats 33, and therefore sixteen respective main pistons 34, while there are fourteen cylindrical secondary seats 35, and therefore fourteen respective secondary pistons 36.

With reference to figures 3 and 4, each cylindrical main seat 33 and each cylindrical secondary seat 35 is connected by means of respective main holes 38 (figure 3) and secondary holes 39 (figure 4) to a hydraulic circuit 40, provided inside the main body 12. A pressurized fluid, generally oil, which moves the main pistons 34 and the secondary pistons 36 in the axial direction to compensate for the dimensional variations of the shaft 3 due to temperature variations, flows into the hydraulic circuit 40.

With reference to figure 2, the supporting body 12 is connected to the case 4 by cylindrical coupling means. Specifically, the cylindrical coupling means comprise two cylinders 42 of the supporting body 12, which extend in a direction orthogonal to axis A and are arranged on opposite sides of the axis A with respect to the middle plane, and two rings of the case 4 (not shown in the accompanying figures), which are engaged by the respective cylinders 42. This type of cylindrical coupling allows the bearing assembly 10 to easily comply with the movements of the shaft 3 during the operation of the turbine 1. In such a manner, possible offsets between the shaft 3 and the main and secondary thrust blocks 13 and 14, which may cause overloads on the same main and secondary thrust blocks 13 and 14, are avoided.

With reference to figures from 1 to 4, the supporting body 12 further comprises a circuit 44 for feeding lubricant oil to the sliding bearing 11, a circuit 45 for feeding shaft-lifting oil, a circuit 46 for feeding lubricant oil to the main thrust block 13 and a circuit 47 for feeding lubricant oil to the secondary thrust block 14.

Specifically, the circuit 44 for feeding lubricant oil to the sliding bearing 11 comprises a manifold (not shown in the accompanying figures), which communicates with a feeding pipe 49 (figure 1) through a hole 50 (figures 1 and 2), and a plurality of pipes 51 (figures 2, 3 and 4), preferably three, connected to the holes 23 (figure 2) of the sliding bearing 11.

With reference to figure 1, the circuit 45 for feeding shaft-lifting oil comprises a pipe 53, which receives the oil through a hole 54 from a feeding pipe (not shown in the accompanying figures), and two branches 55 which communicate with the interior of the sliding bearing 11 by means of the holes 21 (figure 2). The circuit 45 for feeding shaft-lifting oil mainly intervenes during the steps of starting the gas turbine 1 in which the shaft 3 is either static or is at low revolutions.

The circuit 46 for feeding lubricant oil to the main thrust block 13 and the circuit 47 for feeding lubricant oil to the secondary thrust block 14 comprise a lubrication pipe 56 (figures 3 and 4) of the main thrust block 13 and a lubrication pipe 57 (figures 3 and 4) of the secondary thrust block 14, respectively, and are fed by the same feeding pipe (not shown in the accompanying figures) through the hole 58 (figure 2). With reference to figure 3, the main thrust block 13 is substantially ring-shaped and comprises a frame 60 and an array of main slides 61.

The frame 60 is substantially ring-shaped and substantially arranged in abutment with the main edge 27 of the supporting body 12 close to the main side 24 of the supporting body 12 and with the main thrust half rings 15.

The main slide array 61 is annular and comprises a plurality of main slides 63, specifically nineteen, each of which has a surface 64 substantially in contact with the main shoulder 7 and is coupled to respective main leverages 65 of kinematic load transmission of known type (diagrammatically shown in figure 3 by a section block) .

The main leverages 65 are in contact with the main thrust half rings 15 at contact points C1. Such contact points C1 coincide with the load transmission points between the main thrust half rings 15 and the main leverages 65, which, in turn, exchange them with the respective main slides 63.

With reference to figure 5, the primitive obtained by joining the contact points C1 of the main thrust half ring 15 is substantially a circumference of radius R3.

With reference to figure 4, the secondary thrust block 14 is substantially ring-shaped and comprises a frame 66 and an array of secondary slides 67.

The frame 66 is substantially ring-shaped and substantially arranged in abutment with the secondary edge 28 of the supporting body 12 close to the secondary side 25 of the supporting body 12 and with the secondary thrust half rings 16.

The secondary slide array 67 is annular and comprises a plurality of secondary slides 69, specifically thirty, each of which has a surface 70 substantially in contact with the secondary shoulder 8 and is coupled to respective secondary leverages 71 of kinematic load transmission of known type (diagrammatically shown in figure 3 by a section block).

The secondary leverages 71 are in contact with the secondary thrust half rings 15 at contact points C2. Such contact points C2 coincide with the load transmission points between the secondary thrust half rings 16 and the secondary leverages 71, which, in turn, exchange them with the respective secondary slides 69.

With reference to figure 5, the primitive obtained by joining the contact points C2 of the secondary thrust half ring 16 is substantially a circumference of radius R4.

With reference to figure 3, the two main thrust half rings 15 are adapted to be accommodated into the respective main grooves 32a between the supporting body 12 and the main thrust block 13 and have a given axial length A1.

Specifically, the main thrust half rings 15 have one face in contact with the main pistons 34 of center B1 and one face in contact with the main leverages 65 at the points C1.

With reference to figure 5, the centers B1 and the contact points C1 are radially and circumferentially misaligned due to design constraints.

The radial misalignment may generate a non-uniform distribution of the thrusts generated by the main pistons 34 in the main thrust half rings 15.

Specifically, the radial misalignment is equal to the difference between the radius R1 of the primitive of centers B1 of the main pistons 34 and the radius R3 of the primitive of contact points C1 between the main leverages 65 and the main thrust half rings 15.

The effects of the radial misalignment are strongly mitigated by using main thrust half rings 15 having an axial length A1 equal to at least the radial misalignment.

On the other hand, the circumferential misalignment may cause damages to the main leverages 65. The effects of the circumferential misalignment are considerably mitigated by an adequate distribution of the main pistons 34 with respect to the main thrust half rings 15 so as to minimize the circumferential misalignment between the centers B1 and the contact points C1.

With reference to figure 4, the two secondary thrust half rings 16 are adapted to be accommodated into the respective secondary grooves 32a between the supporting body 12 and the secondary thrust block 14 and have a given axial length A2.

Specifically, the secondary thrust half rings 16 have one face in contact with the secondary pistons 36 of center B2 and one face in contact with the secondary leverages 71 at the points C2.

With reference to figure 6, the centers B2 and the contact points C2 are radially and circumferentially misaligned due to design constraints.

The radial misalignment may generate a non-uniform distribution of the thrusts generated by the secondary pistons 34 in the secondary thrust half rings 16.

Specifically, the radial misalignment is equal to the difference between the radius R2 of the primitive of centers B2 of the secondary pistons 36 and the radius R4 of the primitive of contact points C2 between the secondary leverages 71 and the secondary thrust half rings 16.

The effects of the radial misalignment are strongly mitigated by using secondary thrust half rings 16 having an axial length A2 equal to at least the radial misalignment.

On the other hand, the circumferential misalignment may cause damages to the secondary leverages 71. The effects of the circumferential misalignment are considerably mitigated by an adequate distribution of the secondary pistons 36 with respect to the secondary thrust half rings 16 so as to minimize the circumferential misalignment between the centers B2 and the contact points C2.

It is finally apparent that changes and variations may be made to the bearing assembly and gas turbine described herein, without departing from the scope of the appended claims.

## Claims

1. A bearing assembly for a gas turbine (1) comprising a shaft (3), which extends along a longitudinal axis (A) and is provided with at least one annular groove (5) delimited by a cylindrical surface (6), a first annular shoulder (7) and a second annular shoulder (8) facing the first shoulder (7); the bearing assembly (10) being able to be accommodated into the annular groove (5) and comprising a sliding bearing (11) and a cylindrical supporting body (12) arranged about the sliding bearing (11); the sliding bearing (11) axially protrudes with respect to the supporting body (12) in the contact area between the supporting body (12) and the sliding bearing (11); the bearing assembly comprising a main thrust block (13), which is substantially ring-shaped, is arranged between the supporting body (12) and the first shoulder (7) of the groove (5) of the rotor (2), and slides in the axial direction with respect to the supporting body (12); the supporting body (12) being provided with an annular main seat (30) defined by an annular main edge (27); the main thrust block (13) being substantially arranged in abutment with the main edge (27) of the supporting body (12) and being guided by the main edge (27); the bearing assembly comprising two main thrust half rings (15) having an axial length (A1); the supporting body (12) being provided, at the annular main seat (30), with two main grooves (32a) for accommodating the respective main thrust half rings (15) between the supporting body (12) and the main thrust block (13); the main thrust block (13) is substantially ring-shaped and comprises a plurality of main slides (63); each main slide (63) being substantially arranged in contact with the first shoulder (7) and being coupled to respective main leverages (65) of kinematic load transmission, which are in contact with the main thrust half rings (15) at first contact points (C1); the bearing assembly comprising a plurality of substantially cylindrically shaped, main pistons (34), which are provided with main thrust surfaces having a center (B1) and adapted to be arranged in contact with the main thrust half rings (15); the supporting body (12) being provided with a plurality of cylindrical main seats (33) adapted to be engaged by respective main pistons (34);
the bearing assembly being **characterized in that** the main thrust half rings (15) have an axial length (A1) equal to at least the difference between the radius (R1) of a first primitive obtained by joining the centers (B1) of the main pistons (34) and the radius (R3) of a second primitive obtained by joining the first contact points (C1).

2. A bearing assembly according to claim 1, comprising a secondary thrust block (14), which is substantially ring-shaped, is arranged between the supporting body (12) and the second shoulder (8) of the groove (5) of the rotor (2), and slides in the axial direction with respect to the supporting body (12); the supporting body (12) is provided with an annular secondary seat (31) defined by an annular secondary edge (28); the secondary thrust block (14) being substantially arranged in abutment with the secondary edge (28) of the supporting body (12) and being guided by the secondary edge (28); the bearing assembly comprising two secondary thrust half rings (16) having an axial length (A2); the supporting body (12) being provided, at the annular secondary seat (31), with two secondary grooves (32a) for accommodating the respective secondary thrust half rings (16) between the supporting body (12) and the secondary thrust block (14); the secondary thrust block (14) is substantially ring-shaped and comprises a plurality of secondary slides (69); each secondary slide (69) being substantially arranged in contact with the second shoulder (8) and being coupled to respective secondary leverages (71) of kinematic load transmission, which are in contact with the secondary thrust half rings (16) at second contact points (C2); the bearing assembly comprising a plurality of substantially cylindrically shaped, secondary pistons (36), which are provided with secondary thrust surfaces having a center (B2) and adapted to be arranged in contact with the secondary thrust half rings (16); the supporting body (12) being provided with a plurality of cylindrical secondary seats (35) adapted to be engaged by respective secondary pistons (36); the secondary thrust half rings (16) have an axial length (A2) equal to at least the difference between the radius (R2) of a third primitive obtained by joining the centers (B2) of the secondary pistons (36) and the radius (R4) of a fourth primitive obtained by joining the second contact points (C2).

3. A gas turbine comprising a rotor (2), which is provided with a shaft (3) extending along a longitudinal axis (A) and having an annular groove (5), a substantially cylindrical case (4) arranged about the shaft (3), and a bearing assembly (10) accommodated into the groove (5) and supported by the case (4); the gas turbine (1) being **characterized in that** the bearing assembly (10) is of the type claimed in any one of the preceding claims.

## Patentansprüche

1. Lageranordnung für eine Gasturbine (1), die eine Welle (3) umfasst, die sich längs einer Längsachse (A) erstreckt und mit wenigstens einer ringförmigen Nut (5), die von einer zylindrischen Oberfläche (6) begrenzt ist, einer ersten ringförmigen Schulter (7) und einer zweiten ringförmigen Schulter (8), die der ersten Schulter (7) gegenüberliegt, versehen ist; wobei die Lageranordnung (10) in die ringförmige Nut (5) aufgenommen werden kann und ein Gleitlager (11) und einen zylindrischen Stützkörper (12) umfasst, der um das Gleitlager (11) angeordnet ist; wobei das Gleitlager (11) in Bezug auf den Stützkörper (12) im Kontaktbereich zwischen dem Stützkörper (12) und dem Gleitlager (11) axial vorsteht; wobei die Lageranordnung einen Hauptschubblock (13) umfasst, der im Wesentlichen ringförmig ist, zwischen dem Stützkörper (12) und der ersten Schulter (7) der Nut (5) des Rotors (2) angeordnet ist und in der axialen Richtung in Bezug auf den Stützkörper (12) gleitet; wobei der Stützkörper (12) mit einer ringförmigen Hauptaufnahme (30) versehen ist, die durch eine ringförmige Hauptkante (27) definiert ist; wobei der Hauptschubblock (13) im Wesentlichen angrenzend an die Hauptkante (27) des Stützkörpers (12) angeordnet ist und durch die Hauptkante (27) geführt wird; wobei die Lageranordnung zwei Hauptschubhalbringe (15) umfasst, die eine axiale Länge (A1) aufweisen; wobei der Stützkörper (12) an der ringförmigen Hauptaufnahme (30) mit zwei Hauptnuten (32a) zum Aufnehmen der jeweiligen Hauptschubhalbringe (15) zwischen dem Stützkörper (12) und dem Hauptschubblock (13) versehen ist; wobei der Hauptschubblock (13) im Wesentlichen ringförmig ist und mehrere Hauptgleiter (63) umfasst; wobei jeder Hauptgleiter (63) im Wesentlichen in Kontakt mit der ersten Schulter (7) angeordnet ist und mit den jeweiligen Hauptübersetzungen (65) der kinematischen Kraftübertragung, die mit den Hauptschubhalbringen (15) an ersten Kontaktpunkten (C1) in Kontakt sind, gekoppelt ist; wobei die Lageranordnung mehrere im Wesentlichen zylinderförmige Hauptkolben (34) umfasst, die mit Hauptschuboberflächen versehen sind, die eine Mitte (B1) aufweisen und ausgelegt sind, um in Kontakt mit den Hauptschubhalbringen (15) angeordnet zu sein; wobei der Stützkörper (12) mit mehreren zylindrischen Hauptaufnahmen (33) versehen ist, die so ausgelegt sind, dass die jeweiligen Hauptkolben (34) mit ihnen in Eingriff gelangen;
wobei die Lageranordnung **dadurch gekennzeichnet ist, dass** die Hauptschubhalbringe (15) eine axiale Länge (A1) aufweisen, die weinigstens gleich dem Unterschied zwischen dem Radius (R1) eines ersten Grundelements, das durch Verbinden der Mitten (B1) der Hauptkolben (34) erhalten wird, und dem Radius (R3) eines zweiten Grundelements, das durch Verbinden der ersten Kontaktpunkte (C1) erhalten wird, ist.

2. Lageranordnung nach Anspruch 1, die einen Sekundärschubblock (14) umfasst, der im Wesentlichen ringförmig ist und zwischen dem Stützkörper (12) und der zweiten Schulter (8) der Nut (5) des Rotors (2) angeordnet ist und in axialer Richtung in Bezug auf den Stützkörper (12) gleitet; wobei der Stützkörper (12) mit einer ringförmigen Sekundärauflage (31) versehen ist, die durch eine ringförmige Sekundärkante (28) definiert ist; wobei der Sekundärschubblock (14) im Wesentlichen angrenzend an die Sekundärkante (28) des Stützkörpers (12) angeordnet ist und durch die Sekundärkante (28) geführt wird; wobei die Lageranordnung zwei Sekundärschubhalbringe (16) umfasst, die eine axiale Länge (A2) aufweisen; wobei der Stützkörper (12) an der ringförmigen Sekundäraufnahme (31) mit zwei Sekundärnuten (32a) zum Aufnehmen der jeweiligen Sekundärschubhalbringe (16) zwischen dem Stützkörper (12) und dem Sekundärschubblock (14) versehen ist; wobei der Sekundärschubblock (14) im Wesentlichen ringförmig ist und mehrere Sekundärgleiter (69) umfasst; wobei jeder Sekundärgleiter (69) im Wesentlichen in Kontakt mit der zweiten Schulter (8) angeordnet ist und mit den jeweiligen Sekundärübersetzungen (71) der kinematischen Kraftübertragung, die mit den Sekundärschubhalbringen (16) an zweiten Kontaktpunkten (C2) in Kontakt sind, gekoppelt ist; wobei die Lageranordnung mehrere im Wesentlichen zylinderförmige Sekundärkolben (35) umfasst, die mit Sekundärschuboberflächen versehen sind, die eine Mitte (B2) aufweisen und ausgelegt sind, um in Kontakt mit den Sekundärschubhalbringen (16) zu sein; wobei der der Stützkörper (12) mit mehreren zylindrischen Sekundäraufnahmen (35) versehen ist, die so ausgelegt sind, dass die jeweiligen Hauptkolben (36) mit ihnen in Eingriff gelangen; wobei die Sekundärschubhalbringe (16) eine axiale Länge (A2) aufweisen, die wenigstens gleich dem Unterschied zwischen dem Radius (R2) eines dritten Grundelements, das durch Verbinden der Mitten (B2) der Sekundärkolben (36) erhalten wird, und dem Radius (R4) eines vierten Grundelements, das durch Verbinden der zweiten Kontaktpunkte (C2) erhalten wird, ist.

3. Gasturbine, die einen Rotor (2) umfasst, der mit einer Welle (3) versehen ist, die sich längs einer Längsachse (A) erstreckt und eine ringförmige Nut (5), ein im Wesentlichen zylindrisches Gehäuse (4), das um die Welle angeordnet ist, und eine Lageranordnung (10), die in die Nut (5) aufgenommen ist und von dem Gehäuse (4) gestützt wird, aufweist; wobei die Gasturbine (15) **dadurch gekennzeichnet ist, dass** die Lageranordnung (10) von dem Typ nach einem der vorhergehenden Ansprüche ist.

## Revendications

1. Ensemble de palier destiné à une turbine à gaz (1) comprenant un arbre (3), qui s'étend le long d'un axe longitudinal (A) et est pourvu d'au moins une rainure annulaire (5) délimitée par une surface cylindrique (6), un premier épaulement annulaire (7) et un deuxième épaulement annulaire (8) faisant face au premier épaulement (7) ; l'ensemble de palier (10) étant capable d'être reçu dans la rainure annulaire (5) et comprenant un palier lisse (11) et un corps de support cylindrique (12) agencé autour du palier lisse (11) ; le palier lisse (11) fait saillie axialement par rapport au corps de support (12) dans la zone de contact entre le corps de support (12) et le palier lisse (11) ; l'ensemble de palier comprenant un bloc de poussée principal (13), qui est essentiellement en forme d'anneau, est agencé entre le corps de support (12) et le premier épaulement (7) de la rainure (5) du rotor (2), et coulisse dans la direction axiale par rapport au corps de support (12) ; le corps de support (12) étant pourvu d'un siège principal annulaire (30) défini par un bord principal annulaire (27) ; le bloc de poussée principal (13) étant essentiellement agencé en butée avec le bord principal (27) du corps de support (12) et étant guidé par le bord principal (27) ; l'ensemble de palier comprenant deux demi-anneaux de poussée principaux (15) ayant une longueur axiale (A1) ; le corps de support (12) étant prévu, au niveau du siège principal annulaire (30), avec deux rainures principales (32a) permettant de recevoir les demi-anneaux de poussée principaux respectifs (15) entre le corps de support (12) et le bloc de poussée principal (13) ; le bloc de poussée principal (13) est essentiellement en forme d'anneau et comprend une pluralité de glissières principales (63) ; chaque glissière principale (63) étant essentiellement agencée en contact avec le premier épaulement (7) et étant couplée à des leviers principaux respectifs (65) de transmission de charge cinématique, qui sont en contact avec les demi-anneaux de poussée principaux (15) à des premiers points de contact (C1) ; l'ensemble de palier comprenant une pluralité de pistons principaux (34) essentiellement cylindriques, qui sont pourvus de surfaces de poussée principales ayant un centre (B1) et adaptés pour être agencés en contact avec les demi-anneaux de poussée principaux (15) ; le corps de support (12) étant pourvu d'une pluralité de sièges principaux cylindriques (33) adaptés pour venir en prise avec les pistons principaux respectifs (34) ;
l'ensemble de palier étant **caractérisé en ce que** les demi-anneaux de poussée principaux (15) présentent une longueur axiale (A1) égale à au moins la différence entre le rayon (R1) d'une première primitive obtenue en reliant les centres (B1) des pistons principaux (34) et le rayon (R3) d'une deuxième primitive obtenue en reliant les premiers points de contact (C1).

2. Ensemble de palier selon la revendication 1, comprenant un bloc de poussée secondaire (14), qui est essentiellement en forme d'anneau, est agencé entre le corps de support (12) et le deuxième épaulement (8) de la rainure (5) du rotor (2), et coulisse dans la direction axiale par rapport au corps de support (12) ; le corps de support (12) est pourvu d'un siège secondaire annulaire (31) défini par un bord secondaire annulaire (28) ; le bloc de poussée secondaire (14) étant essentiellement agencé en butée avec le bord secondaire (28) du corps de support (12) et étant guidé par le bord secondaire (28) ; l'ensemble de palier comprenant deux demi-anneaux de poussée secondaires (16) ayant une longueur axiale (A2) ; le corps de support (12) étant pourvu, au niveau du siège secondaire annulaire (31), de deux rainures secondaires (32a) permettant de recevoir les demi-anneaux de poussée secondaires respectifs (16) entre le corps de support (12) et le bloc de poussée secondaire (14) ; le bloc de poussée secondaire (14) est essentiellement en forme d'anneau et comprend une pluralité de glissières secondaires (69) ; chaque glissière secondaire (69) étant essentiellement agencée en contact avec le deuxième épaulement (8) et étant couplée à des leviers secondaires respectifs (71) de transmission de charge cinématique, qui sont en contact avec les demi-anneaux de poussée secondaires (16) au niveau de deuxièmes points de contact (C2) ; l'ensemble de palier comprenant une pluralité de pistons secondaires (36) essentiellement cylindriques, qui sont pourvus de surfaces de poussée secondaires ayant un centre (B2) et adaptés pour être agencés en contact avec les demi-anneaux de poussée secondaires (16) ; le corps de support (12) étant pourvu d'une pluralité de sièges secondaires cylindriques (35) adaptés pour venir en prise avec les pistons secondaires respectifs (36) ; les demi-anneaux de poussée secondaires (16) présentent une longueur axiale (A2) égale à au moins la différence entre le rayon (R2) d'une troisième primitive obtenue en reliant les centres (B2) des pistons secondaires (36) et le rayon (R4) d'une quatrième primitive obtenue en reliant les deuxièmes points de contact (C2).

3. Turbine à gaz comprenant un rotor (2), qui est pourvu d'un arbre (3) s'étendant le long d'un axe longitudinal (A) et ayant une rainure annulaire (5), un boîtier essentiellement cylindrique (4) agencé autour de l'arbre (3) et un ensemble de palier (10) reçu dans la rainure (5) et supporté par le boîtier (4) ; la turbine à gaz (1) étant **caractérisée en ce que** l'ensemble de palier (10) est du type revendiqué dans l'une quelconque des revendications précédentes.
